# EUROPÄISCHE PATENTSCHRIFT

(11) **EP 1 247 327 B1**
(45) Veröffentlichungstag und Bekanntmachung des Hinweises auf die Patenterteilung: **30.08.2006**
(21) Anmeldenummer: 01907422.8
(22) Anmeldetag: 09.01.2001
(51) Int. Cl.: H02M 3/00

(54) **SCHALTUNGSANORDNUNG ZUM ANLEGEN EINER VERSORGUNGSSPANNUNG AN EINE LAST**
CIRCUIT ARRANGEMENT FOR APPLYING A SUPPLY VOLTAGE TO A LOAD
ENSEMBLE CIRCUIT SERVANT A APPLIQUER UNE TENSION D'ALIMENTATION A UNE CHARGE

(30) Priorität: 14.01.2000 DE 10001394
(43) Veröffentlichungstag der Anmeldung: 09.10.2002
(73) Patentinhaber: Infineon Technologies AG, 81669 München (DE)
(72) Erfinder: FELDTKELLER, Martin, 81543 München (DE)
(74) Vertreter: Bickel, Michael
(86) Internationale Anmeldenummer: PCT/EP2001/000170
(87) Internationale Veröffentlichungsnummer: WO 2001/052396

(56) Entgegenhaltungen:
- EP-A- 0 585 789
- US-A- 4 414 479
- US-A- 4 559 592
- US-A- 5 014 178
- US-A- 5 621 623
- US-A- 6 002 598

## Beschreibung

Die vorliegende Erfindung betrifft eine Schaltungsanordnung zum Anlegen einer Versorgungsspannung an eine Last gemäß den Merkmalen des Oberbegriffs des Anspruchs 1.

Derartige Schaltungsanordnungen finden beispielsweise in Schaltnetzteilen oder Power-Factor-Controllern Anwendung, bei denen jeweils eine Induktivität nach Maßgabe von Ansteuersignalen getaktet an eine Versorgungsspannung angeschaltet wird. Die Ansteuersignale für den ersten, in Reihe zu der Last geschalteten, ersten Schalter werden dabei von der Steuerschaltung erzeugt, die für ein ordnungsgemäßes Funktionieren eine Versorgungsspannung benötigt, die an deren Spannungsversorgungsklemmen anliegt.

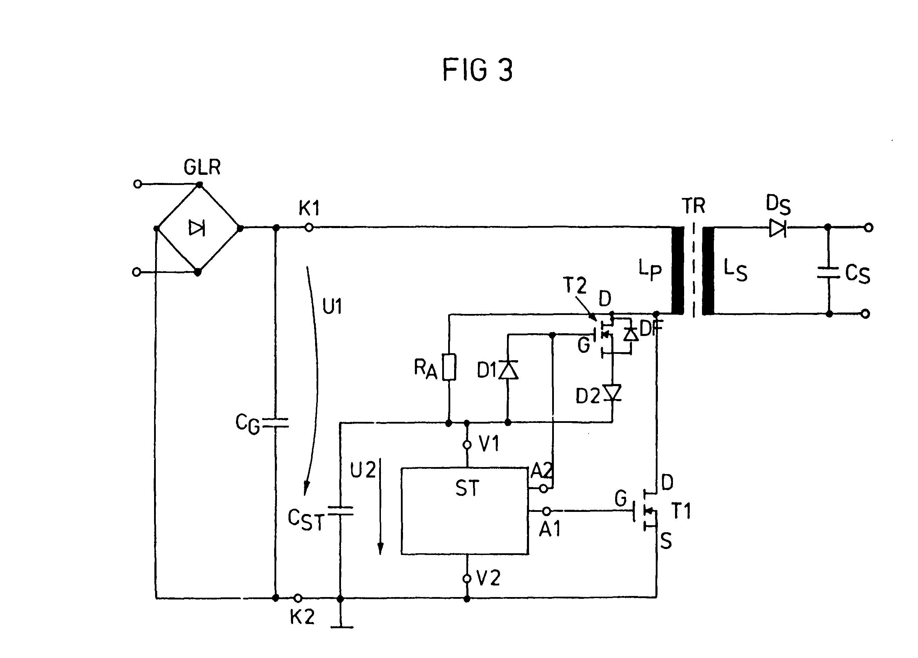

Eine bekannte derartige Schaltungsanordnung ist aus der Europäischen Offenlegungsschrift 0 585 788 A1, insbesondere aus der zugehörigen Figur 3 bekannt. Die Schaltungsanordnung ist dabei Teil eines Schaltnetzteils, wobei eine Reihenschaltung aus der Primärspule eines Übertragers und einem ersten als MOSFET ausgebildeten Schalter zwischen Ausgangsklemmen eines Brückengleichrichters angeschlossen ist. Zur Ansteuerung des MOSFET ist eine Steuerschaltung vorgesehen. Zur Spannungsversorgung der Steuerschaltung ist ein Depletion-MOSFET oder ein JFET (Junction-FET) zwischen die Primärspule und MOSFET geschaltet, wobei eine Versorgungsklemme der Steuerschaltung an einen dem JFET und dem MOSFET gemeinsamen Knoten angeschlossen ist, um eine Versorgungsspannung für die Steuerschaltung auszukoppeln, wenn der MOSFET sperrt. Darüber hinaus ist neben der Sekundärwicklung des Übertragers sekundärseitig eine Hilfswicklung mit nachgeschaltetem Gleichrichter vorgesehen, die ebenfalls der Spannungsversorgung der Steuerschaltung dient.

Leitet bei dieser Vorrichtung der als Schalter wirkende MOSFET, so leitet auch der in Reihe dazu geschaltete JFET.
Sperrt der MOSFET, so beginnt auch der JFET zu sperren, was zur Folge hat, daß annäherungsweise die gesamte versorgungsspannung über dem JFET anfällt. In einer Übergangsphase fließt dabei noch ein Strom über den JFET in die Steuerschaltung, was allerdings mit einer hohen Verlustleistung an dem JFET verbunden ist.

Eine sekundärseitige Hilfswicklung mit Gleichrichter, deren Verwendung zur Spannungsversorgung einer Steuerschaltung auch ohne den JFET gemäß der genannten Druckschrift bereits bekannt ist, erfordert den Einsatz diskreter Bauelemente, deren Kosten sich negativ auf den Gesamtpreis des Netzteils oder des Power-Factor-Controllers auswirken. Dies gilt im Besonderen für Schaltnetzteile in Leistungsklassen zwischen 5W und 20W, die dazu dienen, den sogenannten "Stand-By-Betrieb" von elektronischen Geräten zu sichern, und die unter einem besonderen Kostendruck stehen.

Die US 6,002,598 und die US 5,014,178 beschreiben jeweils Schaltnetzteile mit einem in Reihe zu einer Primärspule eines Transformators geschalteten Halbleiterschalter. Dieser Halbleiterschalter wird durch einen Pulsweitenmodulator angesteuert. Die Spannungsversorgung des Pulsweitenmodulators erfolgt nach Anlaufen des Schaltnetzteils über eine mit der Primärspule gekoppelte Hilfsspule, die einen Versorgungskondensator speist. Um ein Anlaufen des Schaltnetzteils zu ermöglichen ist ein selbstleitender Transistor vorhanden, der zwischen die Primärwicklung und den versorgungskondensator C geschaltet ist und der ein anfängliches Aufladen des Versorgungskondensators ermöglicht. Nach Abschluss des Anlaufvorgangs wird dieser selbstleitende Transistor dauerhaft gesperrt.

Der vorliegenden Erfindung lag daher die Aufgabe zugrunde, eine Schaltungsanordnung der eingangs genannten Art zur Verfügung zu stellen, bei der für die Spannungsversorgung der Steuerschaltung auf eine Hilfswicklung bzw. auf den Einsatz diskreter Bauelemente verzichtet werden kann und bei der beim Bereitstellen der Versorgungsspannung für die Steuerschaltung keine oder nur eine sehr geringe Verlustleistung entsteht.

Diese Aufgabe wird durch eine Schaltungsanordnung gemäß den Merkmalen des Anspruchs 1 gelöst.

Danach weist die Schaltungsanordnung neben dem in Reihe zu der Last geschalteten ersten Schalter einen zweiten Schalter auf, der zwischen die Last und die erste Spannungsversorgungsklemme der Steuerschaltung geschaltet ist. Nach dem Öffnen des ersten Schalter übernimmt dabei der geschlossene zweite Schalter, der ebenfalls durch die Steuerschaltung angesteuert ist, den durch die Last fließenden Strom und führt diesen der Steuerschaltung über deren erste Spannungsversorgungsklemme zu. Der über den zweiten Schalter fließende Strom wird vorzugsweise in einer parallel zu den Spannungsversorgungsklemmen der Steuerschaltung geschalteten Kapazität zwischengespeichert, um nach dem Öffnen dessen zweiten Schalters bis zu dessen nächstem Schließen eine kontinuierliche, nur langsam abnehmende Versorgungsspannung für die Steuerschaltung zur Verfügung zu stellen.

In geschlossenem Zustand fällt über dem zweiten Schalter aufgrund des geringen Leitungswiderstands eine im Verhältnis zur Gesamtspannung nur geringe Spannung ab, wodurch die Verlustleistung an dem zweiten Schalter gering ist. Ein Großteil der Spannung fällt über der Last ab, wobei bei induktiven Lasten Energie gespeichert wird, die nachfolgend in einem Schaltnetzteil oder einem Power-Factor-Controller genutzt wird.

Der zweite Schalter ist als integriertes Bauteil in der integrierten Schaltung für die Steuerschaltung oder der integrierten Schaltung für den ersten Schalter -wobei Steuerschaltung und erster Schalter auch in einer integrierten Schaltung untergebracht sein können- nahezu ohne zusätzlichen Kostenaufwand realisierbar.

Vorteilhafte Ausgestaltungen der Erfindung sind Gegenstand der Unteransprüche.

Gemäß einer ersten Ausführungsfrom der Erfindung ist vorgesehen, eine Reihenschaltung des zweiten Schalters und der Steuerschaltung parallel zu dem ersten Schalter zu schalten. Solange der erste Schalter bei dieser Ausführungsform geschlossen ist, reicht die über der Reihenschaltung aus zweitem Schalter und Steuerschaltung anfallende Spannung nicht aus, um bei geschlossenem zweiten Schalter einen Stromfluß in die Steuerschaltung bzw. auf die parallel zu der Steuerschaltung geschaltete Kapazität zu bewirken. Wird der erste Schalter geöffnet, so steigt die über seiner Laststrecke anfallende Spannung an, bis eine Spannung erreicht ist, bei der ein Strom über den geschlossenen zweiten Schalter auf die Kapazität fließen kann. Die Ansteuerung des zweiten Schalters erfolgt vorzugsweise ebenfalls über die Steuerschaltung, wobei eine zweite Ausgangsklemme der Steuerschaltung an einen Steueranschluß des zweiten Schalters angeschlossen ist.

Die Ansteuerung des zweiten Schalters kann auf verschiedene Weise erfolgen. So kann der zweite Schalter bereits geschlossen sein, wenn der erste Schalter geschlossen ist. Der zweite Schalter kann aber auch erst kurz vor dem Öffnen oder gleichzeitig mit dem Öffnen des ersten Schalters geschlossen werden, um die Steuerschaltung für eine Zeitdauer mit Strom zu versorgen. Die Dauer, während der der zweite Schalter nach dem Öffnen des ersten Schalters noch geschlossen bleibt, ist in der Steuerschaltung abhängig von der über den Spannungsversorgungsklemmen, bzw. über der Kapazität, anliegenden Spannung. Vorzugsweise bleibt der zweite Schalter solange geschlossen, bis in der Kapazität die seit dem letzten Aufladevorgang entnommene Ladung wieder "aufgefüllt" ist bzw. bis die Spannung über der Kapazität einen vorgebbaren Sollwert erreicht.

Gemäß einer weiteren Ausführungsform der Erfindung ist vorgesehen, den zweiten Schalter in Reihe zu dem ersten Schalter und vorzugsweise zwischen die Last und den ersten Schalter zu schalten. Die erste Spannungsversorgungsklemme der Steuerschaltung ist bei dieser Ausführungsform, vorzugsweise über eine Diode, an den dem ersten und zweiten Schalter gemeinsamen Knoten angeschlossen. Leiten der erste und zweite Schalter, fließt ein Strom über die Last und die beiden in Reihe dazu geschalteten Schalter. Nahezu die gesamte über der Reihenschaltung anliegende Versorgungsspannung fällt über der Last ab. Die über dem ersten Schalter abfallende Spannung genügt nicht, um einen Stromfluß in der parallel dazu geschalteten Steuerschaltung bzw. auf die parallel dazu geschaltete Kapazität zu bewirken. Wird der erste Schalter geschlossen und bleibt der zweite Schalter leitend, steigt die über dem ersten Schalter anfallende Spannung an, bis bei geschlossenem zweiten Schalter ein Strom über die Last und den zweiten Schalter auf die Kapazität fließen kann, um diese wieder aufzuladen. Der zweite Schalter ist so dimensioniert, daß er in leitendem Zustand einen geringen Leitungswiderstand aufweist, so daß die darüber anfallende Verlustleistung gering ist.

Der erste und zweite Schalter sind vorzugsweise als Halbleiterschalter, insbesondere als MOSFET ausgebildet, wobei der zweite Halbleiterschalter als Depletion-FET oder JFET ausgebildet sein kann.

Die Erfindung sieht des weiteren die Verwendung der erfindungsgemäßen Schaltungsanordnung in einem Schaltnetzteil oder einem Power-Factor-Controller vor.

Die Erfindung wird nachfolgend in Ausführungsbeispielen anhand von Figuren näher erläutert. Es zeigen:
- Figur 1:: erfindungsgemäße Schaltungsanordnung gemäß einer ersten Ausführungsform;
- Figur 2:: erfindungsgemäße Schaltungsanordnung nach Figur 1 unter Verwendung von Transistoren als erste und zweite Schalter;
- Figur 3:: erfindungsgemäße Schaltungsanordnung gemäß einer zweiten Ausführungsform mit einer gegenüber der Ausführungsform nach Figur 2 geänderten Ansteuerung des zweiten Schalters;
- Figur 4:: erfindungsgemäße Schaltungsanordnung mit einem IGBT als erstem Schalter;
- Figur 5:: erfindungsgemäße Schaltungsanordnung gemäß einer weiteren Ausführungsform, bei der der erste und zweite Schalter in Reihe geschaltet sind;
- Figur 6:: Zeitlicher Verlauf des Stromes über den ersten und zweiten Schalter.

In den Figuren bezeichnen, sofern nicht anders angegeben, gleiche Bezugszeichen gleiche Teile mit gleicher Bedeutung.

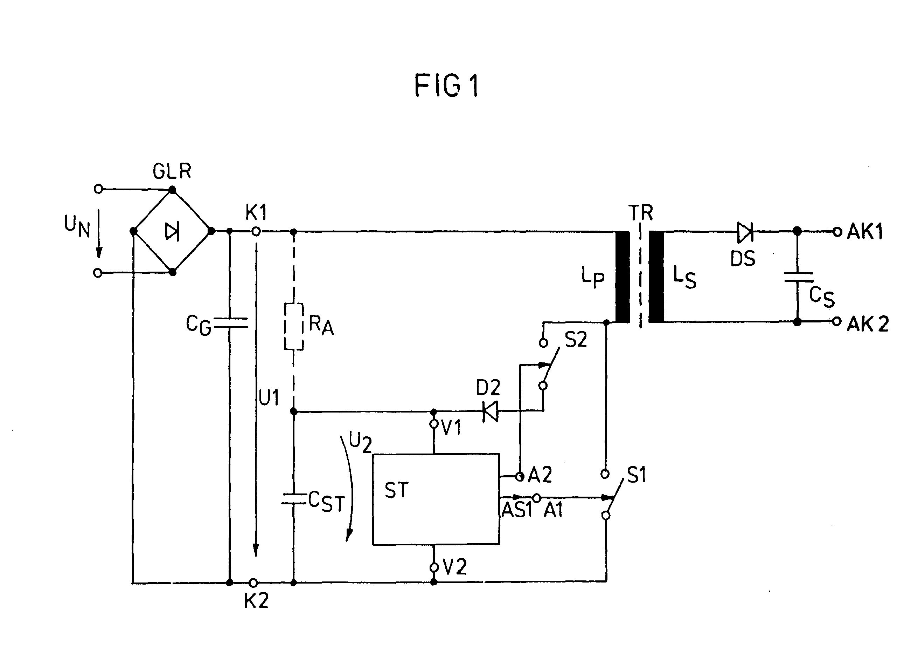

Figur 1 zeigt ein erstes Ausführungsbeispiel einer erfindungsgemäßen Schaltungsanordnung zum getakteten Anlegen einer ersten Versorgungsspannung U1 an eine Last TR. Figur 1 zeigt eine Verwendung der erfindungsgemäßen Schaltungsanordnung in einem Schaltnetzteil, bei dem die erste Versorgungsspannung U1 zwischen ersten und zweiten Versorgungsklemmen K1, K2 zur Verfügung steht, wobei die erste Versorgungsspannung U1 aus einer Netzspannung U_{N} durch Gleichrichten mittels eines Brükkengleichrichters GLR und einer Kapazität C_{G} erzeugt ist. Die an die Versorgungsspannung U1 anzuschaltende Last bildet bei dem Schaltnetzteil eine Primärspule Lₚ eines Übertragers TR, an den sekundärseitig eine Last zur Versorgung mit einer Gleichspannung an Anschlußklemmen AK1, AK2 angeschlossen werden kann. Eine sekundärseitige Gleichrichteranordnung D_{S}, C_{S} dient dabei zum Gleichrichten einer von der Primärspule L_{P} in einer Sekundärspule L_{S} induzierten Spannung.

Die erfindungsgemäße Sachaltungsanordnung gemäβ des ersten Ausführungsfrom weist einen ersten Schalter S1 auf, der in Reihe zu der Primärspule Lₚ geschaltet ist, wobei eine erste Anschlußklemme des ersten Schalters S1 an die Primärspule Lₚ angeschlossen ist. Die Reihenschaltung aus Primärspule Lₚ und dem ersten Schalter S1 ist zwischen der ersten und zweiten Versorgungsklemme K1, K2 verschaltet. Der erste Schalter weist einen Steueranschluß auf, der an eine erste Ausgangsklemme A1 einer Steuerschaltung ST angeschlossen ist, die ein erstes Ansteuersignal AS1 bereitstellt, nach dessen Maßgabe der erste Schalter S1 geöffnet und geschlossen wird.

Die Steuerschaltung ST weist eine erste und eine zweite Spannungsversorgungsklemme V1, V2 zum Anlegen einer zweiten Versorgungsspannung U2 auf, die für ein ordnungsgemäßes Funktionieren der Steuerschaltung U2 erforderlich ist. Parallel zu den Spannungsversorgungsklemmen V1, V2 ist in dem Ausführungsbeispiel eine Speicherkapazität C_{ST} geschaltet, die auch intern in der Steuerschaltung vorhanden sein kann. Zur Spannungsversorgung der Steuerschaltung ST ist erfindungsgemäß ein zweiter Schalter S2 vorgesehen, der zwischen die Primärspule Lₚ und die erste Spannungsversorgungsklemme V1 geschaltet ist. Der zweite Schalter S2 ist in dem Ausführungsbeispiel nach Figur 1 zwischen einen der Primärspule Lₚ und dem ersten Schalter S1 gemeinsamen Knoten und die erste Spannungsversorgungsklemme V1, bzw. die Speicherkapazität C_{ST}, geschaltet. Der zweite Schalter S2 weist einen Steueranschluß zur Zuführung eines zweiten Ansteuersignals A2 auf, wobei der Steueranschluß in dem Ausführungsbeispiel an eine zweite Ausgangsklemme A2 der Steuerschaltung ST angeschlossen ist.

Die Funktion des zweiten Schalters S2 ist es, die Kapazität C_{ST}, welche die für den Betrieb der Steuerschaltung ST erforderliche Spannung, bzw. den erforderlichen Strom, zur Verfügung stellt, im zeitlichen Abstand über die Primärspule Lₚ aufzuladen. Vorzugsweise ist ein -in Figur 1 gestrichelt eingezeichneter- Widerstand R_{A} zwischen die erste Klemme K1 und die Kapazität C_{ST} geschaltet, um zu Beginn, d.h. beim Einschalten des Netzteils, die Kapazität C_{ST} aufzuladen und so Energie für eine erste Erzeugung der Ansteuersignale AS1, AS2 bereitzustellen.

Bei geschlossenem ersten Schalter S1 liegt annäherungsweise die gesamte erste Versorgungsspannung U1 über der Last Lₚ an.

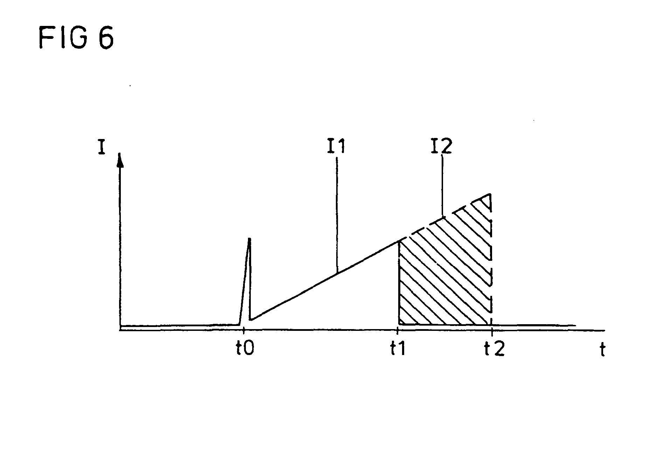

Der Strom steigt dabei -nach einem anfänglichen Stromimpulsstetig an, wie der zeitliche Verlauf des Stroms I1 durch den ersten Schalter nach einem Einschalten zum Zeitpunkt t=t0 in Figur 6 zeigt. Die dabei über dem ersten Schalter S1 anfallende Spannung ist zu gering, um einen Stromfluß über den zweiten Schalter S2 auf die Kapazität C_{ST} hervorzurufen. Üblicherweise ist die über der Kapazität C_{ST} aufgrund der gespeicherten Ladung anliegende zweite Versorgungsspannung U2 bereits größer als die über dem geschlossenen ersten Schalter S1 anliegende Spannung. Eine Diode D2 zwischen der Kapazität C_{ST} und dem zweiten Schalter S2 verhindert, daß bei geschlossenem ersten und zweiten Schalter S1, S2 die in der Kapazität C_{ST} gespeicherte Ladung über die Schalter abfließt.

Wird der erste Schalter S1 zum Zeitpunkt t=t1 geöffnet und ist dabei der zweite Schalter S2 geschlossen so übernimmt der zweite Schalter S2 den über die Primärspule Lₚ fließenden Strom und lädt damit die Kapazität auf bis er angesteuert durch die Steuerschaltung ST zu einem Zeitpunkt t=t3 geöffnet wird. Figur 6 zeigt gestrichelt den Verlauf des Stromes durch den zweiten Schalter S2 nach dem Öffnen des ersten Schalters S1. Man erkennt, daß der Strom durch die Primärspule bis zum Schließen des zweiten Schalters dabei weiter stetig ansteigt. Der Flächeninhalt der schraffierten Fläche entspricht dabei der durch die Kapazität aufgenommenen Ladung. Genau genommen steigt der Strom durch die Primärspule Lₚ beim Aufladen der Kapazität C_{ST} etwas weniger stark als zuvor an, da mit dem Laden der Kapazität C_{ST} ein geringer Spannungsverlust an der Primärspule Lₚ verbunden ist. Üblicherweise beträgt die zweite Versorgungsspannung U2 nicht mehr als 10-15V gegenüber einer ersten Versorgungsspannung U₁ von mehr als 200V, so daß dieser Spannungsverlust kaum ins Gewicht fällt.

Der zweite Schalter S2 weist in geschlossenem Zustand vorzugsweise einen geringen Leitungswiderstand auf, so daß beim Aufladen der Kapazität C_{ST} an dem zweiten Schalter S2 kaum Verlustleistung auftritt.

Während des Aufladens der Kapazität C_{ST} bei geöffnetem ersten und geschlossenem zweiten Schalter S1, S2 wird weiterhin Energie in der Primärspule Lₚ gespeichert, die bei geöffnetem ersten und zweiten Schalter S1, S2 an eine sekundärseitig anschließbare Last abgegeben wird. Die erfindungsgemäße Schaltungsanordnung bewirkt somit eine Spannungsversorgung der Steuerschaltung ST, die einfach realisierbar ist und mit sehr geringen Verlusten arbeitet.

Die Ansteuerung des ersten Schalters S1 funktioniert in der bei Schaltnetzteilen nach dem Stand der Technik bekannten Weise. Die Ansteuerung des zweiten Schalters S2 kann auf verschiedene Art und Weise erfolgen. Maßgeblich ist dabei, daß der zweite Schalter S2 geschlossen ist, wenn der erste Schalter S1 geöffnet wird. Die Schließdauer des zweiten Schalters S2 erfolgt vorzugsweise abhängig von der über der Steuerschaltung ST anliegenden zweiten Versorgungsspannung U2, die wegen der Abgabe von Strom an die Steuerschaltung ST zwischen den Zeitperioden, in denen Ladung über den zweiten Schalter S2 nachfließt, langsam abnimmt. Der zweite Schalter S2 bleibt vorzugsweise so lange geschlossen bis die zweite Versorgungsspannung U2 einen vorgebbaren Sollwert erreicht oder bis eine Ladung auf die Kapazität C_{ST} geflossen ist, die der seit dem letzten Ladungsfluß über den zweiten Schalters S2 abgeflossenen Ladung entspricht, um dann angesteuert durch die Steuerschaltung ST geöffnet zu werden. In der Steuerschaltung ST ist eine Schaltungsanordnung zur Erzeugung eines Ansteuersignals AS2 für den zweiten Schalter abhängig davon, ob die zweite Versorgungsspannung U2 einen Sollwert über- oder unterschreitet, implementiert. Anordnungen, die eine derartige Funktionalität erfüllen, sind nach dem Stand der Technik ebenfalls bekannt und werden hier nicht näher erläutert.

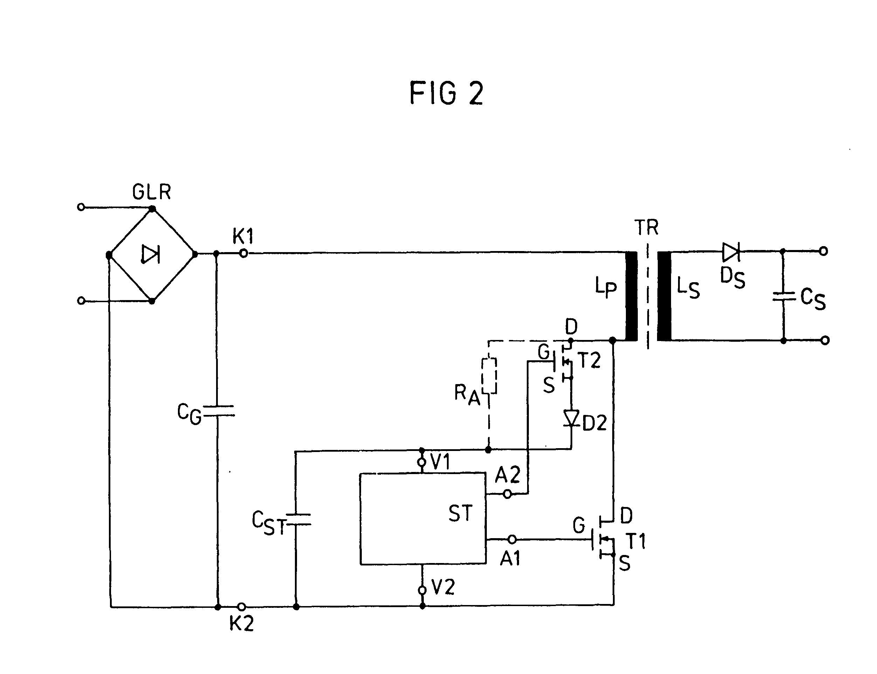

Figur 2 zeigt eine grundsätzlich in Figur 1 beschriebene Schaltungsanordnung, bei der der erste und zweite Schalter S1, S1 als Transistoren T1, T2, insbesondere als MOSFET ausgebildet sind. Der Gate-Anschluß G des ersten Transistors T1 ist dabei an die erste Ausgangsklemme A1 der Steuerschaltung ST, der Gate-Anschluß G des zweiten Transistors T2 ist an die zweite Ausgangsklemme A2 der Steuerschaltung ST angeschlossen. Ein Anlaufwiderstand R_{A} ist bei dieser Ausführungsform vorzugsweise zwischen die Last Lₚ und die Kapazität C_{ST} geschaltet, um zu Beginn die Kapazität C_{ST} aufzuladen. Der Widerstand R_{A} ist dabei so groß gewählt, daß bei leitendem ersten Transistor T1 nur eine geringe Entladung der Kapazität C_{ST} über den ersten Transistor T1 auftritt.

Die Diode D2 verhindert, daß die Kapazität C_{ST} über den zweiten Transistor T2 entladen wird. Technologiebedingt weisen die meisten MOSFET eine integrierte Freilaufdiode auf, die bewirkt, daß bei nicht angelegter Steuerspannung der MOSFET nur in Drain-Source-Richtung D-S sperrt, während der MOSFET bei Anlegen einer Flußspannung zwischen der Source- und der Drain-Elektrode leitet. Die externe zweite Diode D2 verhindert einen Stromfluß in dieser Richtung.

Ist der zweite Transistor als Enhancement-Transistor ausgebildet, so ist bei Verwendung eines n-Kanal-Transistors, an der Gate-Elektrode G ein Potential erforderlich, das größer ist, als das Potential an der Source-Elektrode S, und damit an der ersten Spannungsversorgungsklemme V1. Die Steuerschaltung ST weist vorzugsweise eine Ladungspumpenschaltung oder eine sogenannte Boot-Strap-Schaltung, wie sie nach dem Stand der Technik hinreichend bekannt sind, auf, um aus der zweiten Versorgungsspannung U2 eine höhere Spannung zur Ansteuerung des zweiten Schalters S2 zu erzeugen.

Gemäß einer anderen Ausführungsform ist vorgesehen, den zweiten Transistor als Depletion-FET oder als JFET auszubilden. Derartige Transistoren leiten auch bei geringen negativen Spannungen zwischen der Gate- und der Source-Elektrode G, S und sperren erst, wenn die negative Spannung einen bauartabhängigen Betrag übersteigt. Die Ansteuerung des zweiten Transistors T2 erfolgt dabei vorzugsweise derart daß seine Gate-Elektrode G in der Steuerschaltung ST über die zweite Ausgangsklemme A2 an die erste Spannungsversorgungsklemme V1, und damit an die zweite Versorgungsspannung U2, angeschlossen wird, um den Transistor leitend zu machen. Zum Sperren wird der zweite Transistor T2 vorzugsweise über die zweite Spannungsversorgungsklemme V2 an die zweite Klemme K2 und damit an Bezugspotential angeschlossen.

Figur 3 zeigt eine weitere Ausführungsform der erfindungsgemäßen Schaltungsanordnung, die eine Verwendung von Enhancement-Transistoren als erste und zweite Transistoren T1, T2 ermöglicht. Zwischen die erste Spannungsversorgungsklemme V1, bzw. eine Klemme der Kapazität C_{ST}, und die Gate-Elektrode G des zweiten Transistors T2 ist dabei eine weitere, in Flußrichtung gepolte, Diode D1 geschaltet.

Leitet der erste Transistor T1 angesteuert durch die Steuerschaltung ST, so befinden sich die Drain-Elektroden D des ersten und zweiten Transistors T1, T2 auf einem niedrigen Potential, das annäherungsweise dem Bezugspotential an der zweiten Klemme K2 entspricht. Bedingt durch seine Freilaufdiode DF, die in Figur 3 zur Veranschaulichung eingezeichnet ist, befindet sich die Source-Elektrode S des zweiten Transistors T2 auf einem Potential, das um die Flußspannung dieser Diode DF, d.h. ca. 0,6V, über dem Potential an der Drain-Elektrode D bzw. dem Bezugspotential liegt. Über die Diode D1 liegt die Gate-Elektrode G des zweiten Transistors T2 auf einem Potential, das dem Wert der zweiten Versorgungsspannung U2 abzüglich dem Wert der Flußspannung der ersten Diode D1 entspricht. Dieses Potential ist, bei einer angenommenem zweiten Versorgungsspannung U2 von etwa 10-15V erheblich größer als das Potential an der Source-Elektrode S, so daß der zweite Transistor T2 stets dann leitet, wenn auch der erste Transistor T1 leitet. Solange der erste Transistor T1 leitet fließt dabei kein Strom über den zweiten Transistor T2. Sperrt der erste Transistor T1 bleibt der zweite Transistor T2 leitend, da die in dessen Gate-Kapazität gespeicherte Ladung über die Diode D1 nicht abfließen kann. Der zweite Transistor T2 nimmt dann den Primärstrom der Primärspule Lₚ zur Aufladung der Kapazität C_{ST} auf. Zum Sperren wird der zweite Transistor T2 über die zweite Ausgangsklemme A2 der Steuerschaltung ST, vorzugsweise nach Bezugspotential an der Klemme V2 entladen. Vorzugsweise ist dazu in der Steuerschaltung eine Stromsenke vorhanden, die zwischen die zweite Ausgangsklemme A2 und die zweite Spannungsversorgungsklemme V2, bzw. die Klemme K2, geschaltet werden kann.

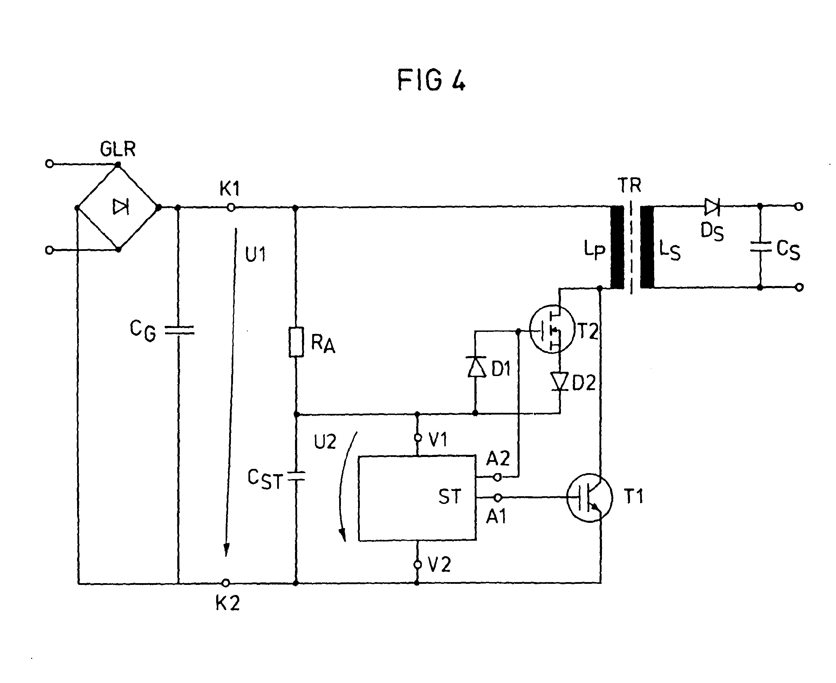

Eine weitere Ausführungsform der Schaltungsanordnung nach Figur 3 ist in Figur 4 dargestellt. Dabei ist der erste Schalter T1 als IGBT ausgebildet, der gegenüber der Verwendung eines MOSFET den Vorteil eines geringeren Widerstands in eingeschaltetem Zustand, jedoch den Nachteil einer längeren Reaktionszeit beim Abschalten hat, d.h. der Strom beim IGBT klingt beim Abschalten langsam ab. Die vorliegende Erfindung ermöglicht, daß dieser Strom langsam abklingen kann, während der zweite Transistor T2 den Primärstrom übernimmt. Die Schaltung ist daher auch bei hohen Schaltfrequenzen einsetzbar.

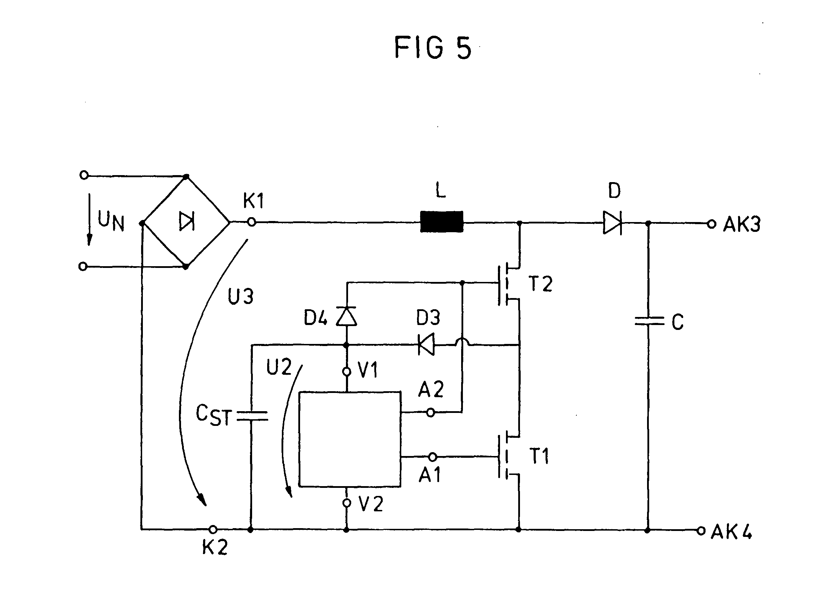

Figur 5 zeigt eine weitere Ausführungsform einer erfindungsgemäßen Schaltungsanordnung, die in einem Power-Factor-Controller verwendet ist und dort zum getakteten Anlegen einer Induktivität L an eine erste, zwischen einer ersten und zweiten Versorgungsklemme K1, K2 anliegende, Versorgungsspannung U3 dient, die von einem Brückengleichrichter GLR aus einer Netzspannung U_{N} erzeugt wird. Bei angelegter Versorgungsspannung U3 nimmt die Induktivität Energie auf, die sie anschließend über eine Gleichrichteranordnung D, C an Ausgangsklemmen AK3, AK4 weitergibt.

Der erste Transistor T1, als erster Schalter, ist in Reihe zu der Induktivität L geschaltet, und dessen Gate-Elektrode G ist an die erste Ausgangsklemme A1 der Steuerschaltung ST angeschlossen. Der zweite Transistor T2, als zweiter Schalter, ist zwischen die Induktivität L und die erste Spannungsversorgungsklemme der Steuerschaltung ST geschaltet, wobei der zweite Transistor T2 bei dieser Ausführungsform in Reihe zu der Induktivität L und den ersten Transistor T1 zwischen die Induktivität L und den ersten Transistor T1 geschaltet ist. Die erste Spannungsversorgungsklemme V1 ist dabei über eine Diode D3 an einen dem ersten und zweiten Transistor T1, T2 gemeinsamen Knoten angeschlossen.

Der Gate-Anschluß des zweiten Transistors T2 ist an die zweite Ausgangsklemme A2 der Steuerschaltung ST und über eine Diode D4 an die erste Spannungsversorgungsklemme V1, bzw. eine Klemme der Kapazität C_{ST}, angeschlossen. Leitet der erste Transistor T1, liegt die Source-Elektrode S des zweiten Transistors T2 annäherungsweise auf dem Bezugspotential der zweiten Klemme, seine Gate-Elektrode liegt annäherungsweise um den Wert der zweiten Versorgungsspannung U2 über dem Wert des Bezugspotentials. Der zweite Transistor T2 leitet damit ebenfalls. Die Induktivität L ist dann an die Versorgungsspannung U3 angeschlossen und nimmt Energie auf. Sperrt der erste Transistor T1, bleibt der zweite Transistor T2 leitend, da seine Gate-Kapazität nicht über die Diode D4 entladen werden kann. Der über die Induktivität fließende Strom fließt dann über den zweiten Transistor T2, und die Diode D3 auf die Kapazität C_{ST} zur Bereitstellung der zweiten Versorgungsspannung U2.

Allen Ausführungsformen ist gemeinsam, daß nach einem Sperren des ersten Transistors T1 die Kapazität C_{ST} über den zweiten Schalter durch den über die Last Lₚ, L fließenden Strom aufgeladen wird. Die in der Kapazität gespeicherte Energie dient zur Versorgung der Steuerschaltung ST bis erneut Ladung über den zweiten Schalter aufgenommen wird. Der zweite Transistor T2 bleibt so lange geschlossen bis eine Ladung auf die Kapazität geflossen ist, die der seit der letzten Ladungsaufnahme abgeflossenen Ladung entspricht.

## Patentansprüche

1. Schaltungsanordnung zum getakteten Anlegen einer ersten Versorgungsspannung (U1, U3) an eine Last (L, Lₚ), wobei die Schaltungsanordnung folgende Merkmale aufweist:
- einen in Reihe zu der Last (L, Lₚ) geschalteten ersten Schalter (S1, T1) mit einem ersten Steueranschluß (G);
- eine Steuerschaltung (ST) zur Ansteuerung des ersten Schalters (S1, T1) mit einer ersten Ausgangsklemme (A1), die an den Steueranschluß (G) des ersten Schalters (S1, T1) angeschlossen ist, mit einer zweiten Ausgangsklemme (A2), an der ein Ansteuersignal (AS2) bereitsteht, und mit einer ersten und zweiten Spannungsversorgungsklemme (V1, V2);
- einen zweiten Schalter (S2, T2), der zwischen die Last (L, Lₚ) und die erste Spannungsversorgungsklemme (V1) der Steuerschaltung (ST) geschaltet ist, mit einem zweiten Steueranschluß (G), dem das Ansteuersignal (AS2) zugeführt ist,
**dadurch gekennzeichnet, daß**
die Steuerschaltung (ST) den ersten und zweiten Schalter (S1, T1, S2, T2) derart ansteuert, daß dieser jeweils nach Öffnen des ersten Schalters für eine vor bestimmte Zeitdauer (t1-t2) geschlossen ist.

2. Schaltugsanordnung nach Anspruch 1,
**dadurch gekennzeichnet, daß**
eine Kapazität (C_{ST}) parallel zu der Steuerschaltung (ST) zwischen die erste und zweite Spannungsversorgungsklemme (V1, V2) geschaltet ist.

3. Schaltungsanordnung nach Anspruch 1 oder 2,
**dadurch gekennzeichnet, daß**
eine Reihenschaltung der Steuerschaltung (ST) und des zweiten Schalters (S2, T2) parallel zu dem ersten Schalter (S1, T1) geschaltet ist.

4. Schaltungsanordnung nach Anspruch 3,
**dadurch gekennzeichnet, daß**
eine Diode (D2) zwischen die erste Spannungsversorgungsklemme (V1) und den zweiten Schalter (S2, T2) geschaltet ist.

5. Schaltungsanordnung nach Anspruch 1 oder 2,
**dadurch gekennzeichnet, daß**
der zweite Schalter (T2) in Reihe zu der Last (L) und den ersten Schalter (T1) geschaltet ist.

6. Schaltungsanordnung nach Anspruch 5,
**dadurch gekennzeichnet, daß**
der zweite Schalter (T2) zwischen die Last (L) und den ersten Schalter (T1) geschaltet ist.

7. Schaltungsanordnung nach einem der vorangehenden Ansprüche,
**dadurch gekennzeichnet, daß**
eine Diode (D3) zwischen den dem ersten und zweiten Schalter (T1, T2) gemeinsamen Knoten und die erste Spannungsversorgungsklemme der Steuerschaltung geschaltet ist.

8. Schaltungsanordnung nach einem der vorangehenden Ansprüche,
**dadurch gekennzeichnet, daß**
eine Diode (D1, D4) zwischen die erste Spannungsversorgungsklemme (V1) und den Steueranschluß (G) des zweiten Schalters (T2) geschaltet ist.

9. Schaltungsanordnung nach einem der vorangehenden Ansprüche,
**dadurch gekennzeichnet, daß**
ein Widerstand (R_{A}) zwischen eine Klemme (K1) für Versorgungsspannung (U1) und die erste Spannungsversorgungsklemme (V1) der Steuerschaltung (ST) geschaltet ist.

10. Schaltungsanordnung nach einem der vorangehenden Ansprüche,
**dadurch gekennzeichnet, daß**
ein Widerstand (R_{A}) parallel zu dem zweiten Schalter (T2) zwischen die Last (Lₚ) und die erste Spannungsversorgungsklemme (V1) geschaltet ist.

11. Schaltungsanordnung nach einem der vorangehenden Ansprüche,
**dadurch gekennzeichnet, daß**
die zweite Spannungsversorgungsklemme (V2) und eine der Last abgewandte Anschlußklemme des ersten Schalters (T1) an eine gemeinsame Klemme (K2) für Bezugspotential angeschlossen sind.

12. Schaltungsanordnung nach einem der vorangehenden Ansprüche,
**dadurch gekennzeichnet, daß**
der erste und zweite Schalter (T1, T2) Halbleiterschalter, insbesondere FET oder IGBT sind.

13. Schaltungsanordnung nach einem der vorangehenden Ansprüche,
**dadurch gekennzeichnet, daß**
der zweite Schalter (T2) ein Depletion-MOSFET oder ein JFET ist.

14. Schaltungsanordnung nach einem der vorangehenden Ansprüche,
**dadurch gekennzeichnet, daß**
der erste Schalter (T1) als IGBT und der zweite Schalter (T2) als MOSFET ausgebildet ist.

15. Schaltungsanordnung einem der vorangehenden Ansprüche,
**dadurch gekennzeichnet, daß** die Steuerschaltung (ST) den ersten und zweiten Schalter (S1, S1, T1, T2) derart ansteuert, dass diese
wenigstens annäherungsweise gleichzeitig geschlossen und zeitlich beabstandet geöffnet werden.

16. Schaltungsanordnung einem der Ansprüche 1 bis 14,
**dadurch gekennzeichnet, daß** die Steuerschaltung (ST) den ersten und zweiten Schalter (S1, S1, T1, T2) derart ansteuert, dass diese
den zweiten Schalter (S2, T2) vor dem oder gleichzeitig mit dem Öffnen des ersten Schalters (S1, T1) schlieβt und nach dem öffnen des ersten Schalters (S1, T1) Öffnet.

17. Schaltungsanordnung nach einem der vorangehenden Ansprüche,
**dadurch gekennzeichnet, daß**
die Schließdauer des zweiten Schalters (52, T2) vom Wert der über den Spannungsversorgungsklemmen (V1, V2) anliegenden Versorgungsspannung (U2) abhängig ist.

18. Verwendung der Schaltungsanordnung nach einem der Ansprüche 1 bis 17 in einem Schaltnetzteil, wobei die Last die Primärspule eines Übertragers ist.

19. Verwendung der Schaltungsanordnung nach einem der vorangehenden Ansprüche 1 bis 17 in einem Power-Factor-Controller, wobei die Last eine von einem Eingangsstrom durchflossene Induktivität ist.

## Claims

1. Circuit arrangement for the clocked application of a first supply voltage (U1, U3) to a load (L, Lₚ), the circuit arrangement having the following features:
- a first switch (S1, T1), connected in series with the load (L, Lₚ), having a first control connection (G);
- a control circuit (ST) for actuating the first switch (S1, T1), having a first output terminal (A1), which is connected to the control connection (G) of the first switch (S1, T1), having a second output terminal (A2), which is provided with an actuation signal (AS2), and having a first and a second voltage supply terminal (V1, V2);
- a second switch (S2, T2), which is connected between the load (L, Lₚ) and the first voltage supply terminal (V1) of the control circuit (ST), having a second control connection (G) to which the actuation signal (AS2) is supplied,
**characterized in that**
the control circuit (ST) actuates the first and second switches (S1, T1, S2, T2) in such a way that the second switch is on for a predetermined time period (t1-t2) whenever the first switch has been turned off.

2. Circuit arrangement according to Claim 1,
**characterized in that**
a capacitor (C_{ST}) is connected in parallel with the control circuit (ST) between the first and second voltage supply terminals (V1, V2).

3. Circuit arrangement according to Claim 1 or 2,
**characterized in that**
a series circuit comprising the control circuit (ST) and the second switch (S2, T2) is connected in parallel with the first switch (S1, T1).

4. Circuit arrangement according to Claim 3,
**characterized in that**
a diode (D2) is connected between the first voltage supply terminal (V1) and the second switch (S2, T2).

5. Circuit arrangement according to Claim 1 or 2,
**characterized in that**
the second switch (T2) is connected in series with the load (L) and the first switch (T1).

6. Circuit arrangement according to Claim 5,
**characterized in that**
the second switch (T2) is connected between the load (L) and the first switch (T1).

7. Circuit arrangement according to one of the preceding claims,
**characterized in that**
a diode (D3) is connected between the node which is common to the first and to the second switch (T1, T2) and the first voltage supply terminal of the control circuit.

8. Circuit arrangement according to one of the preceding claims,
**characterized in that**
a diode (D1, D4) is connected between the first voltage supply terminal (V1) and the control connection (G) of the second switch (T2).

9. Circuit arrangement according to one of the preceding claims,
**characterized in that**
a resistor (R_{A}) is connected between a terminal (K1) for supply voltage (U1) and the first voltage supply terminal (V1) of the control circuit (ST).

10. Circuit arrangement according to one of the preceding claims,
**characterized in that**
a resistor (R_{A}) is connected in parallel with the second switch (T2) between the load (Lₚ) and the first voltage supply terminal (V1).

11. Circuit arrangement according to one of the preceding claims,
**characterized in that**
the second voltage supply terminal (V2) and a connection terminal, remote from the load, of the first switch (T1) are connected to a common terminal (K2) for reference ground potential.

12. Circuit arrangement according to one of the preceding claims,
**characterized in that**
the first and second switches (T1, T2) are semiconductor switches, particularly FETs or IGBTs.

13. Circuit arrangement according to one of the preceding claims,
**characterized in that**
the second switch (T2) is a depletion-mode MOSFET or a JFET.

14. Circuit arrangement according to one of the preceding claims,
**characterized in that**
the first switch (T1) is in the form of an IGBT, and the second switch (T2) is in the form of a MOSFET.

15. Circuit arrangement according to one of the preceding claims,
**characterized in that**
the control circuit (ST) actuates the first and second switches (S1, S2, T1, T2) in such a way that they are turned on at least approximately at the same time and are turned off at an interval of time.

16. Circuit arrangement according to one of Claims 1 to 14,
**characterized in that**
the second switch (S2, T2) the control circuit (ST) actuates the first and second switches (S1, S2, T1, T2) in such a way that they turn on before or at the same time as the first switch (S1, T1) is turned off, and turn it on after the first switch (S1, T1) has been turned off.

17. Circuit arrangement according to one of the preceding claims,
**characterized in that**
the duration for which the second switch (S2, T2) is on depends on the value of the supply voltage (U2) which is present across the voltage supply terminals (V1, V2).

18. Use of the circuit arrangement according to one of Claims 1 to 17 in a switched-mode power supply, where the load is the primary coil of a transformer.

19. Use of the circuit arrangement according to one of the preceding Claims 1 to 17 in a power factor controller, where the load is an inductor through which an input current flows.

## Revendications

1. Ensemble circuit pour l'application synchronisée d'une première tension d'alimentation (U1, U3) à une charge (L, Lₚ), l'ensemble circuit présentant les caractéristiques suivantes :
- un premier commutateur (S1, T1) branché en série avec la charge (L, Lₚ) et doté d'un premier raccord de commande (G) ;
- un circuit de commande (ST) pour exciter le premier commutateur (S1, T1) avec une première borne de sortie (A1) reliée au raccord de commande (G) du premier commutateur (S1, T1), avec une deuxième borne de sortie (A2) sur laquelle un signal d'excitation (AS2) est prêt à être émis et avec une première et une deuxième borne d'alimentation en tension (V1, V2) ;
- un deuxième commutateur (S2, T2) commuté entre la charge (L, Lₚ) et la première borne d'alimentation (V1) du circuit de commande (ST), avec un deuxième raccord de commande (G) auquel est amené le signal d'excitation,
**caractérisé en ce que**
le circuit de commande (ST) excite le premier et le deuxième commutateur (S1, T1, S2, T2) de manière à ce que celui-ci soit respectivement fermé après l'ouverture du premier commutateur pour une durée donnée (t1-t2).

2. Ensemble circuit selon la revendication 1,
**caractérisé en ce qu'**
une capacité électrique (C_{ST}) est branchée en parallèle avec le circuit de commande (ST) entre la première et la deuxième borne d'alimentation en tension (V1, V2).

3. Ensemble circuit selon la revendication 1 ou 2,
**caractérisé en ce qu'**
un branchement en série avec le circuit de commande (ST) et le deuxième commutateur (S2, T2) est monté en parallèle avec le premier commutateur (S1, T1).

4. Ensemble circuit selon la revendication 3,
**caractérisé en ce qu'**
une diode (D2) est branchée entre la première borne d'alimentation en tension (V1) et le deuxième commutateur (S2, T2).

5. Ensemble circuit selon la revendication 1 ou 2,
**caractérisé en ce que**
le deuxième commutateur (T2) est monté en série avec la charge (L) et le premier commutateur (T1).

6. Ensemble circuit selon la revendication 5,
**caractérisé en ce que**
le deuxième commutateur (T2) est branché entre la charge (L) et le premier commutateur (T1).

7. Ensemble circuit selon l'une quelconque des revendications précédentes,
**caractérisé en ce qu'**
une diode (D3) est branchée entre le noeud commun au premier et au deuxième commutateur (T1, T2) et la borne d'alimentation en tension du circuit de commande.

8. Ensemble circuit selon l'une quelconque des revendications précédentes,
**caractérisé en ce qu'**
une diode (D1, D4) est branchée entre la première borne d'alimentation en tension (V1) et le raccord de commande (G) du deuxième commutateur (T2).

9. Ensemble circuit selon l'une quelconque des revendications précédentes,
**caractérisé en ce qu'**
une résistance (R_{A}) est montée entre une borne (K1) pour l'alimentation en tension (U1) et la première borne d'alimentation en tension (V1) du circuit de commande (ST).

10. Ensemble circuit selon l'une quelconque des revendications précédentes,
**caractérisé en ce qu'**
une résistance (RA) est montée en parallèle avec le deuxième commutateur (T2) entre la charge (Lₚ) et la première borne d'alimentation en tension (V1).

11. Ensemble circuit selon l'une quelconque des revendications précédentes,
**caractérisé en ce que**
la deuxième borne d'alimentation en tension (V2) et une borne de raccord du premier commutateur (T1) opposée à la charge est raccordée à une borne commune (K2) pour un potentiel de référence.

12. Ensemble circuit selon l'une quelconque des revendications précédentes,
**caractérisé en ce que**
le premier et le deuxième commutateur (T1, T2) sont des commutateurs semi-conducteurs, notamment des transistors à effet de champ FET, ou des transistors bipolaires à grille isolée, IGBT.

13. Ensemble circuit selon l'une quelconque des revendications précédentes,
**caractérisé en ce que**
le deuxième commutateur (T2) est un dispositif MOS à effet de champ MOSFET à déplétion ou un transistor à effet de champ de jonction, JFET.

14. Ensemble circuit selon l'une quelconque des revendications précédentes,
**caractérisé en ce que**
le premier commutateur (T1) est un IGBT et le deuxième commutateur (T2) est un MOSFET.

15. Ensemble circuit selon l'une quelconque des revendications précédentes,
**caractérisé en ce que**
le circuit de commande (ST) excite le premier et le deuxième commutateur (S1, S2, T1 T2) de manière ce qu'ils soient fermés au moins approximativement simultanément et ouverts avec un décalage dans le temps.

16. Ensemble circuit selon l'une quelconque des revendications 1 à 14,
**caractérisé en ce que**
le circuit de commande (ST) excite le premier et le deuxième commutateur (S1, S2, T1, T2) de manière à fermer le deuxième commutateur (S2, T2) avant ou simultanément avec l'ouverture du premier commutateur (S1, T1) et à ouvrir après l'ouverture du premier commutateur (S1, T1).

17. Ensemble circuit selon l'une quelconque des revendications précédentes,
**caractérisé en ce que**
la durée de fermeture du deuxième commutateur (S2, T2) dépend de la valeur de la tension d'alimentation (U2) appliquée par les bornes d'alimentation en tension (V1, V2).

18. Utilisation de l'ensemble circuit selon l'une quelconque des revendications 1 à 17, dans une partie de circuit combinatoire, la charge étant la bobine primaire d'un translateur.

19. Utilisation de l'ensemble circuit selon l'une quelconque des revendications précédentes 1 à 17, dans un Power-Factor-Controller, la charge étant une inductance traversée par un courant d'entrée.
